# EUROPÄISCHE PATENTSCHRIFT

(11) **EP 0 885 643 B1**
(45) Veröffentlichungstag und Bekanntmachung des Hinweises auf die Patenterteilung: **06.04.2005**
(21) Anmeldenummer: 98110869.9
(22) Anmeldetag: 15.06.1998
(51) Int. Cl.: B01D 33/056, B01D 33/048

(54) **Bandfiltervorrichtung mit Bandspurführung**
Belt filter device with belt steering
Dispositif à bande filtrante avec guidage de bande

(30) Priorität: 16.06.1997 US 876577
(43) Veröffentlichungstag der Anmeldung: 23.12.1998
(73) Patentinhaber: Mann + Hummel GmbH, 71638 Ludwigsburg (DE)
(72) Erfinder: Croket, Frank M., Louisville, KY 40222 (US)
(74) Vertreter: Voth, Gerhard, Dipl.-Ing.

(56) Entgegenhaltungen:
- DE-C- 846 392
- US-A- 3 017 997
- US-A- 3 807 569
- US-A- 3 997 448

## Beschreibung

Die vorliegende Erfindung bezieht sich auf eine Bandfiltervorrichtung mit einer Bandspurführung für ein über Bandträgerrollen geführtes endloses flexibles Filterband.

In Anordnungen mit beweglichen Filterbändern, insbesondere mit solchen Filterbändern aus lockerem Fasermaterial, wie sie in verschiedenartigen Druck-, Vakuum- und Umgebungsdruckfilteranordnungen zur Filterung von Materialpartikeln angewendet werden, sind bislang einige Bandspurführungs- oder Zentriervorrichtungen für bewegliche Filterbänder zum Einsatz gekommen. Diese herkömmlichen, mit gewölbten, gerundeten oder spitz zulaufenden Antriebs- und/oder Abtriebsrollen ausgestatteten Spurführungsvorrichtungen, haben sich nicht immer als effektiv erwiesen, da zunehmend Probleme in bezug auf eine Zentrierung sowie eine variable Einstellung der Bandspannung und der gedehnten Bandlänge und -breite auftreten.

In vorangegangenen US-Patentschriften haben sich im großen und ganzen 2 Anordnungsarten zur Spurführung und zentrierten Ausrichtung von Laufbändern durchgesetzt, nämlich jene, bei denen Bandelemente in Verbindung mit Bandträgerrollen zur Anwendung kommen und solche, die Gleitschuhe an den Seitenkanten der beweglichen Bänder vorsehen. Zu der Gruppe von Patenten, die eine Anwendung mit Bandelementen in Verbindung mit Rollen vorsehen, gehört die US-A-3,116,244,wonach Bandzentrierungsstege beschrieben werden, die mit den beweglichen Bandträgerrollen zusammenwirken, wobei die Stege an der Rolle in fixierter, und spiralförmig abgeschrägter Richtung zu den gegenüberliegenden Rollenenden verlaufen. US-A-3,144,409 beschreibt ähnliche Stege und spiralförmige Rippen, die an einer Abzugsrolle angeordnet sind und sich bis zu den Rollenden erstrecken, wobei der Flüssigkeitsdruck zwischen den beabstandeten Drehungen zu querverlaufenden Ausbauchungen des beweglichen Trägerbandes führen kann.

In der US-A- 3,997,448 werden wiederum ähnliche an einer Trägerrolle angebrachte Spiralen beschrieben, welche die Spannungsriemen des Filterbandes in eine querverlaufende Schräglage zwingen. Und schließlich beschreibt die US-A- Nr. 4,684,011 auf Rollen angebrachte O-Ringe, wobei Zugdruckschuhe direkt in diese O-Ringe eingreifen, um so eine Rotation der Rollen zu bewirken. In der Tat unterscheiden sich die Bandelemente - wie sie in dieser Gruppe von Patentschriften beschrieben werden - in bezug auf ihre Funktion und Struktur von der neuheitlichen und einzigartigen Strukturvorrichtung, wie sie hier dargelegt wird.

Für die Gruppe von Patenten, in denen Gleitschuhe zur Anwendung kommen - nämlich in US-A- 3,503,517, US-A- 3,598,244, US-A- 3,615,023 und US-A-3,642,142 , wird in jeder einzelnen Patentschrift eine Bandkantengreifvorrichtung beschrieben, die entlang der Seitenkanten eines beweglichen Bandes angreift, um an den Seiten desselben Spannung aufzubringen. Die Patente der letztgenannten Gruppe unterscheiden sich - ebenso wie die zuvor beschriebenen Patente in Verbindung mit Bandelementen - hinsichtlich ihrer Funktion und Struktur von der neuheitlichen und erfindungsgemäßen Strukturanordnung, wie sie hier im folgenden weiter ausgeführt wird.

Die EP 0 045 540 A1 beschreibt eine Einrichtung zur Ausrichtung eines Bandes, wobei diese Einrichtung zwei Rollen aufweist, zwischen denen das Band durchgeführt wird. Diese Rollen sind zur besseren Führung des Bandes mit O-Ringen versehen und derart gelagert, dass durch Verstellung der Rollenlager eine Straffung des Bandes durchgeführt werden kann.

Nach der vorliegenden Erfindung wird eine Bandfiltervorrichtung mit einer Spurvorrichtung für bewegliche Bänder vorgesehen, insbesondere für ein elastisches, aus porigem Webfaserstoff bestehendes Filterband, das unkompliziert sowie kostengünstig in der Herstellung und Montage ist, wodurch viele Schwierigkeiten, die bisher mit herkömmlichen Bandspurvorrichtungen aufgetreten sind, beseitigt oder teilweise behoben werden können; gleichzeitig ist nur noch ein Minimum an Teilen für einen effektiven Betrieb erforderlich. Darüber hinaus sieht die vorliegende Erfindung vor, daß die Anordnung je nach den verschiedenen Bandtypen, Bandbreiten, Bandgeweben und sich ändernden Bandspannungen leicht bewegt, angepaßt und in Position gebracht werden kann. Dieser Aufbau ermöglicht eine einsatzfähige und vereinfachte Anpassung und Einstellung der verschiedenen Bandarten, Bandmaterialien und Bandgrößen bei einer ebenso unkomplizierten und effizienten Entnahme bzw. Austausch der kritischen Paßteile sowie einer genauen Angleichung der Bandzentrierung. Zur gleichen Zeit sieht die Vorrichtung einen problemlosen und günstigen Spannungswechsel von Laufbändern vor, und zwar sowohl an der geradlinigen, zentralen Bewegungsachse eines sich in Längsrichtung erstreckenden Bandes als auch über die Bandbreite quer zu dieser linearen Bewegungsachse.

In der hier dargelegten Offenbarung werden weitere Merkmale der vorliegenden Erfindung für Fachleute auf diesem Gebiet deutlich.

Die Bandfilterrorrichtung mit Bandspurführung gemäß der vorliegenden Erfindung Spurführungsvorrichtung vorgesehen, die zur Sicherung eines elastischen Laufbandes in zentraler Ausrichtung an einem Riementrägerteil umfaßt ion wesentlichen folgende Komponenten: ein elastisches Band, deren Breite zuvor ausgewählt wird, mit einer in Längsrichtung verlaufenden linearen Mittelachse, die auf beabstandeten Bandträgerteilen angebracht ist, um eine geradlinige Bandbewegung entlang der Trägerteile zu ermöglichen; mindestens ein Trägerteil weist eine im wesentlichen zylinderförmigen Rolle auf, deren Längsachse sich quer zur linearen Bewegungslinie des flexiblen Laufbandes erstreckt, wobei die Umfangsfläche der Rolle an dem elastischen Band anliegt; einstellbare und nach oben hervortretende Höcker, welche sich an zuvor ausgewählten erhöhten Positionen von der Umfangsfläche der Rolle erstrecken, um an vorher ausgewählten Punkten der anliegenden Seitenkanten des Bandes gegen eine angrenzende Fläche des angrenzenden elastischen Bandes einzugreifen, so daß das Laufband ständig in zentrierter Ausrichtung gehalten wird.

Die Merkmale der erfindungsgemäßen Bandfiltervorrichtung sind im Anspruch 1 definiert.

Weitere Merkmale sind den abhängigen Ansprüchen 2 und 3 zu entnehmen.

### Kurzbeschreibung der Zeichnungen

In den Zeichnungen wird ein vorteilhaftes Ausführungsbeispiel sowie eine Variante der vorliegenden Erfindung dargestellt. Es zeigen:
Figur 1 ist eine schematische Querschnittsdarstellung einer Trägervorrichtung für endlose Filterbänder in einem Druckfilterbehälter, der nach der vorliegenden Erfindung die neuheitliche Spurführungsvorrichtung für Laufbänder aufnehmen kann.
Figur 2 zeigt eine Vergrößerung einer teilweise geschnittenen Trägerantriebsrolle - wie sie auch in der schematischen Schnittdarstellung von Figur 1 gezeigt ist wobei in diesem Fall die Antriebsrolle eine vorteilhafte Weiterbildung der neuheitlichen Spurführungsvorrichtung für Laufbänder aufnimmt.
Figur 3 zeigt eine Vergrößerung einer teilweise geschnittenen spannungsbetriebenen Trägerabtriebsrolle - wie sie auch in der schematischen Schnittdarstellung von Figur 1 gezeigt ist -, wobei auch in diesem Fall die Abtriebsrolle eine vorteilhafte Weiterbildung der neuheitlichen Spurführungsvorrichtung für Laufbänder aufnimmt.

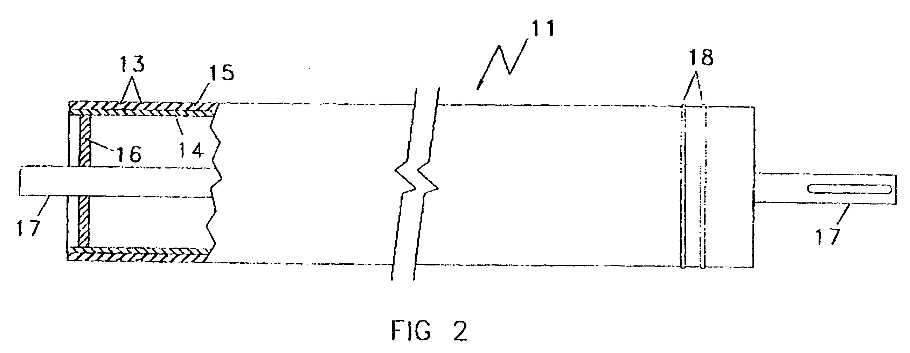

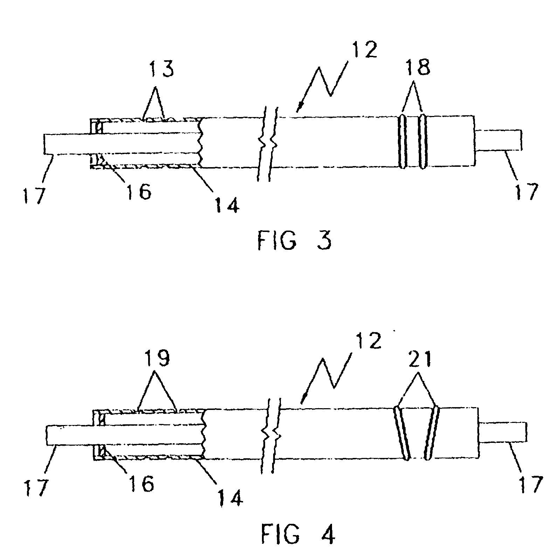

Nach einem weiteren Merkmal der vorliegenden Erfindung zufolge, zeigt Figur 4 eine vergrößerte und gebrochene Ansicht der gegenüberliegenden Enden der Rolle, wie sie in den Figuren 2 und 3 dargestellt ist, in diesem Fall in abgeänderter Form, so daß die O-Ring-Paare, die bezogen auf die längsverlaufende Laufrichtung der Rolle abgeschrägt sind, sichtbar werden.

### Detaillierte Beschreibung der Erfindung

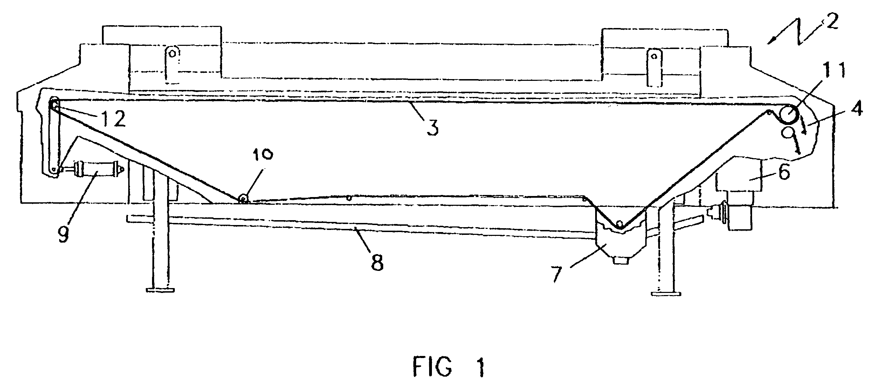

In der Prinzipdarstellung von Figur 1 ist ein sich der Länge nach erstreckender Filtrationsbehälter 2 zu erkennen, in den ein längs verlaufendes, endloses und bewegliches Filterband 3 eingebracht ist. Die Vorrichtung - wie sie in Figur 1 dargestellt ist - ist insbesondere für Druckfiltrationen entwickelt worden, es ist jedoch so gedacht, daß die neuheitliche Spurführungsvorrichtung nach der vorliegenden Erfindung nicht nur auf die hier dargelegte Vorrichtung beschränkt wird, sondern auch in der Vakuumfiltration zur Anwendung kommen kann sowie mit jeder beliebigen Anzahl von Laufbandanordnungen, die eine Spurführung und eine zentrierte Ausrichtung der Bänder verlangen.

Gemäß Figur 1 sind neben Filtrationsbehälter 2 folgende Komponenten anliegend an der unteren Bahn des endlosen, beweglichen Filterbandes 3 angeordnet: Bandkratzer 4, Bürstvorrichtung 6, Unterseitenwaschmechanismus 7 für das Filterband, Auffangschale 8 sowie Bandspannvorrichtung 9. Im Filtrationsbehälter 2 kann ein geeigneter Flüssigkeitseinlaß sowie ein Flüssigkeitsauslaß - beide sind nicht in Figur 1 dargestellt - vorgesehen werden, und zwar vorteilhafterweise am Oberteil bzw. an der Seite des Filtrationsbehälters 2. Die Bandträgerantriebsrolle 11 (siehe Figur 2) liegt unterhalb der oberen Bahn des endlosen Filterbandes 3 an der einen Seite des Behälters 2 an, wohingegen die Spannrolle bzw. die Abtriebsträgerrolle 12 auf der gegenüberliegenden Seite des Filtrationsbehälters 2 unterhalb der oberen Bahn des Endlosbandes 3 anliegt. Darüber hinaus ist es möglich, mehrere beabstandete, kleinere Bandspannrollen 10 vorzusehen, um das endlose Filterband geradlinig an den zwei Bahnen der Bewegungslinie entlang weiterzuführen.

Nach der vorliegenden Erfindung und wie in den vergrößerten Darstellungen der Antriebs- und Abtriebsrollen gemäß Figur 2 bzw. 3 deutlicher zu erkennen ist, weist die Anordnung entsprechend dieser Erfindung ein elastisches Band mit einer zuvor ausgewählten Breite und einer längs verlaufenden geraden Mittelachse auf, wobei das Band 3 an mit Zwischenräumen angeordneten Bandträgerteilen angebracht ist, um das Band 3 geradlinig entlang der Trägerteile zu führen. Gemäß der hier ausgeführten Weiterbildung der Erfindung könnten die mit Zwischenräumen angeordneten und zylinderförmigen Antriebs- und Abtriebsrollen 11 bzw. 12 (siehe Figur 2 und 3) sowie die beabstandeten Bandspannrollen 10 (siehe Figur 1 und 3) als Trägerteile dienen, wie sie in Figur 1 der Zeichnungen dargestellt sind. Die Längsachsen der jeweiligen zylinderförmigen Rollen 11, 12 bzw. 10 verlaufen quer zur geradlinigen Laufrichtung des Bandes 3, wobei die Umfangsfläche der einzelnen Rollen an einer Bandfläche anliegt. Gemäß Figur 1 der Anmeldung ist es möglich, daß der endlose Filterriemen 3 aus einem gewebten Polyestermaterial oder einem beliebigen geeigneten Filtermaterial besteht, das nach den jeweils gegebenen Filterungsbedingungen ausgewählt werden kann. In der Regel sind die Bänder aus einem porigen Medium und somit geeignet zur Filterung von Partikeln enthaltenden Materialien aus einem Flüssigkeitsstrom, mit einer Partikelgröße von circa dreißig (30) bis fünfhundert (500) Mikrometer. Im allgemeinen haben die aus einem Flüssigkeitsstrom abzuscheidenden Partikel eine Größe von circa einhundert (100) Mikrometer. Die Erfindung ist jedoch so zu verstehen, daß speziell entwickelte Filterbänder, die zur Filterung von Partikeln außerhalb der zuvorgenannten Größenordnung liegen, je nach den vorgegebenen Filterungsbedingungen ebenfalls in der neuheitlichen Vorrichtung der hier vorliegenden Erfindung eingesetzt werden können. Des weiteren ist die Erfindung so zu verstehen, daß die Breite der Filterbänder in der Regel in einem Bereich von achtunddreißig (38) Inch bis vierundneunzig (94) Inch verändert werden kann. Im Normalfall weisen die Filterbänder entlang ihrer gegenüberliegenden Seitenkanten aufgenähte und enggewebte Seitenrandeinfassungen auf, die sich entlang der gegenüberliegenden Bandflächen um jeweils zweieinhalb (2,5) Inch von jedem Rand ausdehnen.

Wie bereits zuvor beschrieben, dient die Bandspannvorrichtung 9 zur Regulierung der geradlinigen Spannung auf das Band 3 über die Abtriebsoder Spannrolle 12 (siehe Figur 1).

Gemäß der hier vorliegenden Erfindung ist mindestens eine der zylinderförmigen Antriebs- und Abtriebsrollen 11 und 12 (siehe Figur 2 bzw. 3) mit einem Satz von in Abständen angeordneten, umlaufenden, O-Ringe aufnehmenden Rillen vorzusehen, die sich um die Umfangsfläche der Rolle herum erstrecken.

Nach den in Figur 2 und 3 dargestellten Ausführungsbeispielen sind sowohl die Antriebsrolle 11 als auch die Abtriebsrolle oder Spannrolle 12 derart mit solchen Rillenpaaren ausgestattet, daß jeder Satz paarweise angeordnete und beabstandete O-Ringe aufnehmende Rillen 13 aufweist, die so positioniert sind, daß ein Abstand zu den gegenüberliegenden Rollenenden gegeben ist. In der die Antriebsrolle 11 exakt umschließenden Rohrumhüllung 15 sind Rillen 13 angeordnet, die ausreichend tief sind, um circa ein Drittel (1/3) des Durchmessers des darin einzusetzenden O-Ringes aufzunehmen und so eine mögliche Verschiebung des O-Ringes aus der jeweiligen Rille 13 auszuschließen. In vorteilhafter Weise wird dabei die Position der Außenrille 13 eines Paares auf die Rolle 11 bezogen, um ein Eingreifen eines in die Rille eingebrachten O-Ringes mit der anliegenden Filterbandfläche 3 zu ermöglichen, und zwar an einer Linie entlang, die circa einen (1) Inch von der Seitenkante des Bandes verläuft. Die Innenrille des Rillenpaares ist vorteilhafterweise ungefähr einen (1) Inch von der Außenrille des Rillenpaares beabstandet.

In Figur 2 wird die möglicherweise gewölbt ausgestaltete Antriebsrolle 11 mit einem längs verlaufenden zylinderförmigen Rohr 14 dargestellt, das aus einem geeigneten, stabilen Material wie z. B. einer Metalllegierung oder Kunststoff gefertigt wurde. Das Rohr 14 weist - wie zuvor erwähnt - eine umgebende Umwicklung 15 aus einem elastischen Material, beispielsweise einem geeigneten Elastomer wie Buna™ oder Viton™, auf. In die besagte Ummantelung werden die Rillen 13 eingelassen. An den gegenüberliegenden und am inneren Kreisumfang befestigten Seiten ist das Rohr 14 außerdem mit Abschlußplatten 16 ausgestattet, von denen nur eine in Figur 2 dargestellt ist. Diese Abschlußplatten können ebenfalls aus einem ähnlichen Material wie das des Rohres 14 hergestellt werden. Eine Antriebswelle 17 verläuft durch die Platten 16 und erstreckt sich entlang der längsgerichteten Mittelachse des Rohres 14. An einer Seite ist die Welle 17 mit einem Schlitz versehen, um eine Befestigung an einem geeigneten, hier nicht dargestellten Antriebsmotor zu ermöglichen.

Ein Satz der elastischen O-Ringe 18, die vorteilhafterweise aus einem synthetischen Material - aus polymerisiertem Butadien Viton™ - geformt sind, werden so bemessen, daß sie satt anliegend und federnd in dem jeweils dafür vorgesehenen Rillenpaar 13 eingebracht werden, wobei circa ein Drittel (1/3) des Durchmessers des gut eingepaßten O-Ringes 18 in der Rille aufgenommen wird, um so eine mögliche Verschiebung des O-Ringes aus der jeweiligen Rille auszuschließen. Der jeweils überstehende Teil des O-Rings dient als Höcker, welcher parallel zur Laufrichtung des Bandes circa einen (1) Inch bzw. zwei (2) Inch von der jeweils gegenüberliegenden Seitenkante des endlosen Filterbandes 3 gegen die anliegende Filterbandfläche 3 eingreift. Auf diese Weise wird eine zentrierte Ausrichtung des Filterbandes 3 gewährleistet.

Es ist darauf hinzuweisen, daß die vorliegende Erfindung nicht auf diese bestimmte Anordnung mit O-Ringen 18 und Rillen 13 - wie sie hier beschrieben wird - zu beschränken ist. So ist es beispielsweise möglich, Abstand, Anzahl, Beschaffenheit der Rillen und O-Ringe zu verändern, ohne von dem Umfang und der Intention der vorliegenden Erfindung abzukommen. So können beispielsweise, wie auch in Figur 4 dargestellt wird, die Rillen so geformt sein, daß darin eingebrachte O-Ringe in vorteilhafter Weise schräg verlaufen, bezogen auf die längsgerichtete Laufrichtung des Bandes und auf die Achse der Rolle, an der die Rillen vorgesehen sind. Nach dem Ausführungsbeispiel in Figur 4, ist jede Rille 19 eines Rillenpaares aus einem Satz in der Weise ausgestaltet, daß die darin eingebrachten O-Ringe 21 eine derartige Position einnehmen können, daß sie schräg zueinander und zur Laufrichtung des Bandes verlaufen, so daß sie die dazwischenliegende Fläche des Filterbandes 3 halten. Nach einer vorteilhaften Ausgestaltung kann die Abschrägung in einem Winkel zu dem sonst normal angeordneten O-Ring, parallel zur Laufrichtungsposition, verlaufen, so daß der Winkel zur Laufrichtung des Bandes in einem Bereich von circa ein (1) bis zehn (10) Grad liegt. Abschrägungsrichtung und -winkel hängen u. a. von folgenden Parametern ab: Materialbeschaffenheit des Filterbandes, Eingriffsposition am Filterband sowie die angreifenden Reibungsflächen der O-Ringe und des Filterbandes. Darüber hinaus ist es möglich, die Anzahl der Rillen und O-Ringe sowie deren Abschrägungsrichtung je nach der seitlichen Zentrierungsspannung zu verändern, die für das Band 3 gewünscht wird.

## Patentansprüche

1. Bandfiltervorrichtung mit einem über Bandträgerrollen geführten endlosen flexiblen Filterband (3), wobei dieses Filterband mit einer zuvor bestimmten Breite, mit einer längs verlaufenden, geradlinigen Mittelachse auf beabstandete Bandträgerteile montiert ist, um einen geradlinigen Lauf des elastischen Bandes entlang dieser Trägerteile zu ermöglichen, wobei mindestens eines der besagten Bandträgerteile eine im wesentlichen zylinderförmige Rolle (11, 12) ist, deren Längsachse quer zur geradlinigen Laufrichtung des flexiblen Bandes verläuft, und die Umfangsfläche der Rolle an dem flexiblen Band (3) anliegt, wobei wenigstens eine Bandträgerrolle (11, 12) nach oben hervortretende Höckerelemente zur Bandspurführung aufweist, die sich zum Eingreifen gegen die angrenzende Fläche des anliegenden flexiblen Bandes an einer zuvor ausgewählten Position von der Umfangsfläche der Rolle bis zu einer vorher ausgewählten Position zur linearen Laufrichtung des flexiblen Bandes erstreckt, so dass dieses in einer zentrierten Ausrichtung verbleibt, wobei dies Höckerelemente einen Satz aus zwei beabstandeten O-Ringen (18), die in Rillen (13,19) eingebracht sind, aufweisen, und wobei die O-Ringe des Satzes mit Zwischenräumen angeordnet an den gegenüberliegenden Rollenenden anliegen, um gegen die angrenzende Fläche der anliegenden Breite des flexiblen Filterbandes (3) in einem vorher ausgewählten beabstandeten Verhältnis zu den gegenüber liegenden Seitenkanten der Bandbreite einzugreifen.

2. Bandfiltervorrichtung nach Patentanspruch 1, wonach die O-Ringe (18) des Satzes schräggestellt sind, so dass sie nach außen hin schrägauseinanderlaufen sowie von der Bewegungslinie der geradlinigen Mittelachse des flexiblen Bandes (3) weg und auf die gegenüberliegenden Seitenkanten der Bandbreite zu gerichtet sind, um seitlich entlang der Bandbreite Spannkraft zu erzeugen.

3. Bandfiltervorrichtung nach Patentanspruch 1, wonach das flexible Filterband (3) ein locker gewebtes Gurtband aus einem Filtermaterial ist.

## Claims

1. Belt filter apparatus having an endless, flexible filter belt (3) guided via belt support rollers, wherein this filter belt, with a predetermined width with a rectilinear central axis extending in a longitudinal manner, is mounted on spaced belt support parts in order to enable a rectilinear passage of the flexible belt along these support parts, wherein at least one of the said belt support parts is a substantially cylindrical roller (11, 12), the longitudinal axis of which extends transversely relative to the rectilinear direction of passage of the flexible belt and the circumferential face of the roller abuts against the flexible belt (3), wherein at least one belt support roller (11, 12) includes upwardly protruding protuberant elements for guiding the belt, which, for engaging against the adjacent face of the abutting flexible belt in a pre-selected position, extend from the circumferential face of the roller as far as a pre-selected position relative to the linear direction of passage of the flexible belt, such that said belt remains in a centred alignment, wherein the protuberant elements include a set of two spaced O ring seals (18), which are inserted in grooves (13, 19), and wherein the O ring seals of the set, disposed with intermediate spaces, abut against the oppositely situated roller ends in order to engage against the adjacent face of the abutting width of the flexible filter belt (3) at a pre-selected spaced ratio relative to the oppositely situated lateral edges of the belt width.

2. Belt filter apparatus according to claim 1, according to which the O ring seals (18) of the set are inclined such that they diverge outwards in an inclined manner and are aligned away from the line of movement of the rectilinear central axis of the flexible belt (3) and towards the oppositely situated lateral edges of the belt width in order to generate tensional force laterally along the belt width.

3. Belt filter apparatus according to claim 1, according to which the flexible filter belt (3) is a loosely woven belt strap produced from a filter material.

## Revendications

1. Dispositif à bande filtrante comportant une bande filtrante (3) flexible sans fin guidée sur des rouleaux de support de bande, cette bande filtrante étant montée avec une largeur prédéterminée et avec un axe médian s'étendant longitudinalement de façon rectiligne sur des pièces de support de bande situées à distance les unes des autres, afin de permettre une trajectoire rectiligne de la bande élastique le long de ces pièces de support, au moins l'une des pièces de support de bande étant un rouleau pour l'essentiel cylindrique (11, 12) dont l'axe longitudinal s'étend perpendiculairement à la trajectoire rectiligne de la bande flexible et la surface périphérique du rouleau reposant contre la bande flexible (3), au moins un rouleau de support de bande (11, 12) présentant des éléments bombés dépassant vers le haut pour le guidage de la bande qui, pour s'engrener contre la surface adjacente de la bande flexible attenante, s'étendent au niveau d'une position préalablement choisie par rapport à la trajectoire linéaire de la bande flexible, de telle sorte que celle-ci conserve une orientation centrée,
dans lequel
ces éléments bombés présentent un jeu composé de deux joints toriques (18) situés à distance l'un de l'autre et insérés dans des rainures (13, 19) et les joints toriques du jeu reposent avec des espaces intermédiaires contre les extrémités opposées des rouleaux, afin de s'engrener contre la surface attenante de la largeur adjacente de la bande filtrante flexible (3) à une distance choisie à l'avance par rapport aux arêtes opposées de la largeur de bande.

2. Dispositif à bande filtrante selon la revendication 1,
**caractérisé en ce que**
les joints toriques (18) du jeu sont inclinés de telle sorte qu'ils s'étendent vers l'extérieur à l'oblique en s'éloignant de la ligne de mouvement de l'axe médian rectiligne de la bande flexible (3) et sont orientés vers les arêtes latérales opposées de la largeur de bande, afin de générer latéralement une force de tension le long de la largeur de bande.

3. Dispositif à bande filtrante selon la revendication 1,
**caractérisé en ce que**
la bande filtrante flexible (3) est une bande continue à maille large constituée d'un matériau filtrant.
